# EUROPEAN PATENT SPECIFICATION

(11) **EP 1 652 366 B1**
(45) Date of publication and mention of the grant of the patent: **03.02.2010**
(21) Application number: 03816884.5
(22) Date of filing: 09.05.2003
(51) Int. Cl.: H04M 1/05

(54) **AUDIO HEADSET**
AUDIO-HEADSET
KIT MAINS LIBRES

(43) Date of publication of application: 03.05.2006
(73) Proprietor: Cellpoint Connect AB, 181 25 Lidingö (SE)
(72) Inventor: VARMING, Michael, DK-4760 Vordingborg (DK)
(74) Representative: Inspicos A/S
(86) International application number: PCT/NO2003/000153
(87) International publication number: WO 2004/100508

(56) References cited:
- WO-A1-02/45390
- DE-U1- 29 718 483
- US-A- 5 712 453
- US-A- 5 953 435
- US-A- 6 122 388

## Description

### Background of the invention

The present invention concerns an audio headset that is connected to a fixed, mobile or cordless telephone or similar 2-way communication device through a cable or a wireless link.

Such a headset is a unit used for hands free operation of a 2-way communication device allowing the user to perform a dialogue with a remote partner and still having both hands free for other tasks without the use of loudspeaking technology. The headset is, as the name indicates, placed on the user's head, with a small loudspeaker placed near the ear, and possibly a microphone picking up the sound of the user's voice. The headset is connected to the 2-way communication device through a wire or a wireless connection.

Typical headsets in the marketplace today are supported by fixation around the user's ear, which can be quite uncomfortable for the user. It is also very difficult to combine such a support device with ordinary spectacles, since the spectacle side bar will be in conflict with the fixation of the headset over the ear.

US Patent No. 5,659,156 discloses a so-called earmold intended for the same purpose as the present invention. This earmold has a protrusion intended to penetrate into the area under the Crus of the Helix of the user's ear, while the complete housing of the device substantially fills up the Cavum Concha and the area between the Tragus and Antitragus. Thus, this earmold is intended to be seated relatively deep in toward the Auditory Canal of the user, and even has a protrusion that enters the canal. The US publication states that the earmold disclosed is intended to reduce discomfort, but it seems clear that this device nevertheless will be seated relatively deep in toward the Auditory Canal, thereby providing poor ambient sound penetration and problems regarding blocked perspiration, leading to skin irritation.

US Patent No. 6,122,388 discloses a similar device, with a protrusion intended to penetrate into the area between the upper base region of the Antihelix and the Crus Helix, i.e. into the Cymba Concha. In addition, there is a protrusion that engages the Tragus, i.e. in the area between the Tragus and the Antitragus, and a rather large engagement region along the curvature of the edge of the Antihelix. This device also protrudes into the auditory canal, and clearly suffers from the same problems as the previously mentioned device regarding blocking of ambient sound and blocking of perspiration.

Another headset device is known from International Patent Application, publication No. WO 02/45390. This device does not have the character of an "ear plug" like the two previously discussed devices, but is arranged with a loudspeaker grille outside the Auditory Canal, but it nevertheless relies on support using details adapted to the anatomic details of the ear. Hence, this device is equipped with a C-shaped, large pad that is intended to provide support by engaging the edge of the Antihelix substantially all the way and protruding with its upper end into the Cymba Concha area between the inferior Crux of the Antihelix and the Crus of the Helix, and with its lower end in along/under the Antitragus and into the cavity formed below the Tragus.

It seems clear that the large pad of the device disclosed in WO 02/45390 necessarily must give rise to similar problems as mentioned with regard to the two prior art publications, even if it maintains some distance from the entrance to the Auditory Canal. Also, many people have a distinct and emphasized Crus of Helix, and the C-shaped, large pad will tend to interfere with the Crus of Helix, thereby leading to discomfort and soreness after some period of use. Or, the device may not stay fixed as intended in the outer ear, but will be forced outwards by the Crus of Helix.

### Brief summary of the invention

The present invention aims at solving or at least diminishing the above mentioned problems of the prior art, and the intention is achieved through the provision of an audio headset that includes
- loudspeaker means for directing sound toward a user's auditory canal and arranged in a loudspeaker housing;
- microphone means for picking up the user's voice;
- communication means for receiving and transmitting signals between a separate 2-way communication device and the loudspeaker means and the microphone means, respectively;
- support means attached to the loudspeaker housing on a side facing the user's ear and adapted for supporting the headset by engagement with anatomic details of the user's ear. The audio headset of the invention is **characterized in that** the support means comprise at least two support pads arranged around a loudspeaker grille and having openings between them, a first one of the pads being shaped and positioned to fit into the area of the Cymba Concha by penetration from the area below the Inferior Crux of the Antihelix and above the Crus of Helix, and a second pad being positioned and shaped to fit between the Tragus and the Antitragus.

In one embodiment of the invention, a third support pad is shaped and positioned so as to engage the rear wall of the Concha, to provide improved stability.

In another embodiment of the invention, a third and a fourth support pads are positioned and shaped so as to engage the rear wall of the Concha, however with an opening between them having a length comparable to a pad dimension.

The communication means may include a radio receiver, a transmitter and an antenna, all located inside the loudspeaker housing for wireless 2-way communication with the separate communication device. In this case, a battery compartment can be arranged as an extension downward from the loudspeaker housing. A user interface may be integrated in the battery compartment, by means of operating buttons arranged in a compartment wall.

Alternatively, the communication means may include a 2-way cable connection with the separate communication device.

The support pads can either be adjustably attached to the loudspeaker housing, or be of different sizes in order to provide proper and comfortable support of the headset in ears of different sizes.

As it appears from the above, this invention suggests a 2 or 3 pad shaped form, with specifically the area around the Crus of Helix removed, in comparison with the devices of the prior art that utilize a continuous form like a C-shape or similar.

Prominent advantages of the present invention are better air ventilation, leading to improved comfort for the user, since the air can ventilate through two or more ventilation openings, as compared to only one opening or no openings at all, as well as adding a 3-dimensional sound propagation to the user's ear. Since surrounding sound is allowed to penetrate the user's ear from 2-3 directions, the user is able to distinguish the direction of the sound source more easily.

### Brief description of the several views of the drawing

In the following, a more detailed explanation of the invention will be given, by discussing exemplary embodiments thereof, and at the same time referring to the appended drawings, of which
Fig. 1 shows important anatomic details of a typical human ear,
Fig. 2 shows an embodiment of a headset in accordance with the invention, in an outside side view,
Figs. 3a, b show details regarding positioning and shape of support pads on the ear-facing side of embodiments of the headset of the invention,
Fig. 4 shows a headset arranged in a user's ear, in a transparent view,
Fig. 5 shows a user with a mobile phone and a headset, and
Fig. 6 is a sketch showing general interior details of a headset.

### Detailed description of the invention

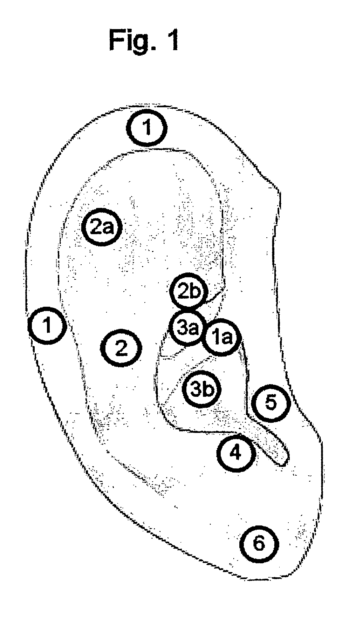

First, it is referred to Fig. 1 which depicts a typical human ear and the anatomical details thereof: reference numeral 1 designates the Helix, i.e. the outer and upper edge of the ear. The Crus 1 a of the Helix is the part that curves in and back in continuation from the Helix, at the forward end of the ear. Reference numeral 2 designates the Antihelix which is a large area "inside" the Helix and which has two subparts, namely the superior Crux 2a and the inferior Crux 2b of the Antihelix.

Reference numeral 3 designates the Concha below the inferior Crux 2b, and the Concha is divided by the Crus of the Helix 1 a into the Cymba Concha 3a thereabove and the Cavum Concha 3b therebelow, leading to the Auditory Canal.

Below the Cavum Concha 3b we find the Antitragus 4 and the Tragus 5 on respective sides of the opening leading to the Auditory Canal, and lowermost, reference numeral 6 designates the lobe.

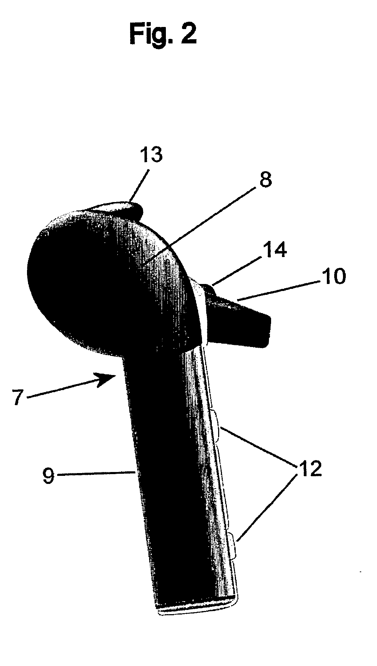

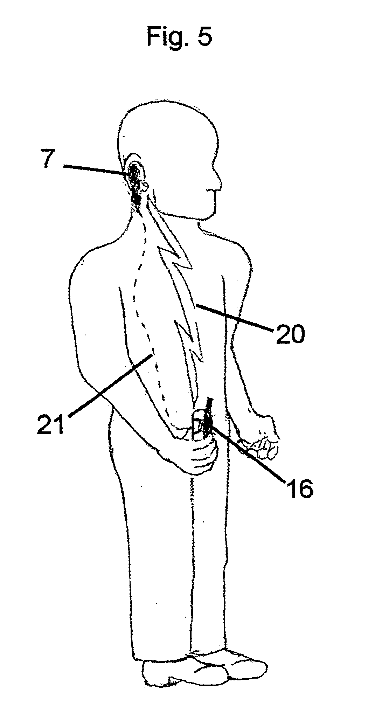

Mobile phones are becoming very widespread, and the use can be quite extensive. There is therefore a need for a headset that can be worn extensively, in extreme cases all of the day, without any discomfort for the user. Further, the headset should neither reduce the user's hearing significantly by blocking up the ear canal, nor reduce the directional comprehension of the sound source. Referring to Fig. 2, an embodiment of a complete headset 7 in accordance with the invention appears in a side view. The main part is a loudspeaker housing 8, on the non-visible side of which a loudspeaker grille faces the ear of the user. The embodiment shown is a wireless type that is equipped with a battery compartment 9 that extends downward from the loudspeaker housing 8. It should be noted that such a battery compartment may not be necessary in an embodiment with a cable connection between the headset 7 and a main 2-way communication device carried by the user, e.g. a mobile telephone (see Fig. 5).

A necessary element to provide 2-way communication is, however, a microphone that is designated by reference numeral 10. In this embodiment, the microphone is arranged integral with the loudspeaker housing 8 or on a short extension therefrom, to pick up sound from the user's mouth. The microphone may be equipped with a directional acoustic pipe for tunnelling the user's voice into the microphone, for improved audio performance.

Reference numeral 12 designates a user interface in the form of finger-operated buttons. In this embodiment, it is convenient to locate the buttons 12 on the battery compartment 9, but in an embodiment without a battery compartment, a user interface can be provided e.g. on the outside of, or at an edge of the loudspeaker housing 8.

However, in the embodiment of Fig. 2, the user interface 12 is integrated in the battery compartment 9 for optimal use and grip, so that the buttons can be gripped and pressed for stability while avoiding the sensation of pressing the headset further into the ear like when the user interface is located on the outside of the headset.

In Fig. 2, the most important element of the invention is only visible in part at the top of the picture, namely a first pad 13, and just barely the tip of a second pad 14 behind the area where the microphone 10 is located in the loudspeaker housing 8. In the most basic embodiments of the invention, two such pads 13, 14 provide the only means of support for the headset, by being shaped and positioned so as to fit into selected areas of the user's ear. With reference to Fig. 1, the two areas to be engaged by the pads 13, 14 are respectively the Cymba Concha 3a and the area between the Tragus 5 and the Antitragus 4. Using only two pads 13, 14 for support will ensure good comfort as regards ventilation and perspiration for the user, and provide very good conditions regarding the user's ability to hear environment sounds.

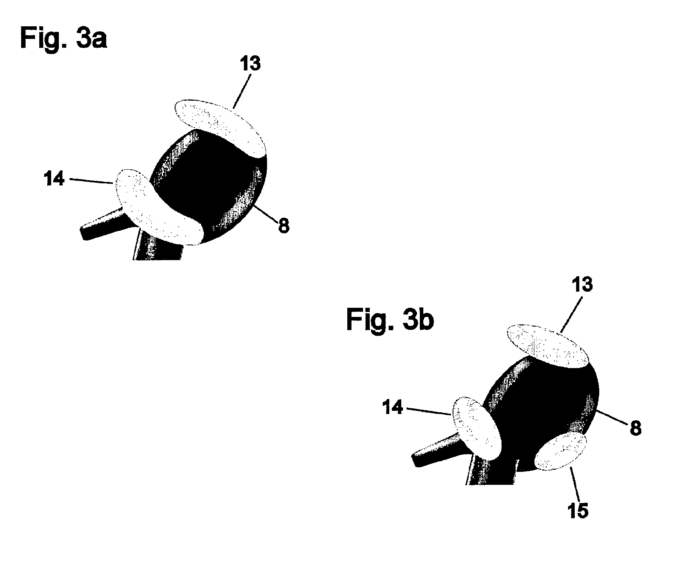

The other side of the loudspeaker housing 8, i.e. the side with a central loudspeaker grille facing the user's ear, appears in Fig. 3a, that shows the same embodiment as Fig. 2. Pads 13 and 14 appear clearly as one upper pad 13 and one lower pad 14, both with a somewhat elongate shape. When pad 13 engages the area of the Cymba Concha from the area below the inferior Crux 2b of the Antihelix, and pad 14 at the same time enters the area between the Tragus 5 and the Antitragus 4, the headset is fixed firmly in the user's outer ear. Furthermore, the openings between the two pads 13, 14 are quite large, allowing free passage of surrounding sound, as well as proper ventilation.

The size of the pads 13, 14 may be smaller than what appears from Fig. 3a, with a gain regarding ventilation and sound, but at a cost regarding stability and firm support. However, in Fig. 3b appears an embodiment in which one further pad 15 has been added to provide better stability but nevertheless good ventilation and sound conditions. In this embodiment, the two first pads 13, 14 have somewhat smaller dimensions, but are shaped and positioned to engage the ear in the same places as in the embodiment with only two pads. Pad 15 is shaped and positioned to engage the circumferential wall region at the rear of the Concha 3. Thereby, proper support and firm fixation in the ear is obtained.

It is important that the openings between the pads are sufficiently large. Therefore, it is believed that increasing the number of pads beyond three will not provide any special improvement over the case with three pads, because very small pads may not be comfortable in the user's ear.

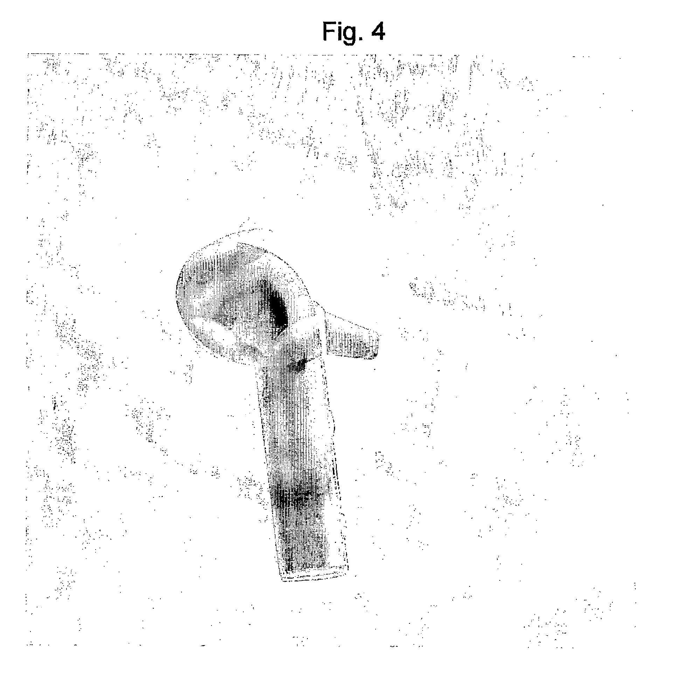

In Fig. 4 appears a "transparent view" of a 3-pad headset in accordance with an embodiment of the present invention, shown in a position fixed in a user's ear. It appears clearly how the upper pad has been entered into the Cymba Concha area, while the lower/forward pad is in the cavity between the Tragus and the Antitragus, and the third rear pad engages the Concha wall, while leaving large openings between them to provide ventilation and sound penetration. It should be mentioned at the same time, that a battery compartment such as indicated in Fig. 4 and in Fig. 2, actually may improve the stability of the headset and fixate the centre of gravity, forming a continuation of the form of the headset from the Antitragus/Tragus area of the ear and downwards.

As regards the pads that constitute an important part of the present invention, they must be provided with a firm and non-allergen surface. A soft rubber-like surface will not withstand the chemical reactions from the perspiration of the human ear and can easily be dissolved thereby and give a glutinous sensation. A material like standard ABS is preferable. The surface can either be pure plastic material or treated with paint for cosmetic purposes. Electro- or vacuum plated surfaces could cause allergic reactions and is thereby not recommended for this purpose, at least not for the pads or the parts in contact with the user's skin or ear. The pads should be solid to provide the proper firmness. The pads are preferably fixed to the loudspeaker housing 8 in a flexible manner, since people's ears have different sizes, or should be of different sizes for optimal fitting. The loudspeaker housing may be equipped with grooves into which pad sockets can be slid for variable fixation, or openings combined with snap-in functions to keep the pads in place.

Fig. 5 depicts a user carrying a 2-way communication device 16 which is in this case a mobile phone, but could equally well be a cordless telephone or a hand-held radio set for 2-way communication on any available frequency band. The two possibilities of connection between the 2-way communication device 16 and a separate headset 7 are shown simultaneously as a dashed-line cable connection 21 and a short-distance radio communication link 20. Such short-distance radio communication is quite common now ("Bluetooth").

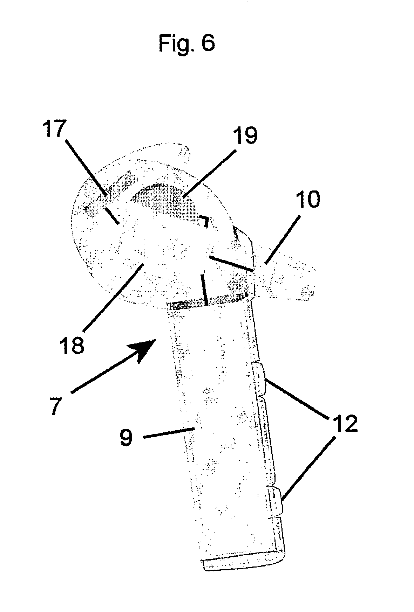

Fig. 6 shows internal details in a headset 7 in accordance with a "radio" embodiment: An antenna 17 is connected to a receiver/transmitter module 18 that receives power from batteries in compartment 9 and is controlled by the user interface 12. The microphone 10 and a loudspeaker 19 are connected to the module 18.

Finally, it should be emphasized that the headset of the present invention is a headset that will fit in the outer ear of the user without engaging the Auditory Canal. Some prior art inventions depict a related concept, but they will allow surrounding sound to penetrate the ear through one ear vent only. Thereby, venting of the ear will be reduced, which reduces the possibility of perspiration form the ear to dissipate freely. By introducing plural such venting openings like in the present invention, preferably 2 or 3 openings, it is obtained that moisture can ventilate better, and at the same time, sound from the surroundings may penetrate from various directions. This is obtained through the introduction of at least 2 pads that will fix the headset firmly in the outer ear of the user, block the headset from rotation and allow air and sound to propagate freely through openings. The length of the venting openings should be comparable to a pad length dimension. The pads are formed as one penetrating the area in the Cymba Concha from the area below the inferior Crux of the Antihelix and above the Crus of Helix, another pad between the Tragus and the Antitragus, and a third pad is placed against the circumferential wall region of the Concha. The two first-mentioned pads block the headset from rotation around a horizontal axis, while the third pad provides further stability.

## Claims

1. An audio headset for fitting the outer ear of a user without engaging the Auditory Canal, the headset including:
- loudspeaker means (19) for directing sound toward a user's auditory canal and arranged in a loudspeaker housing (8);
- microphone means (10) for picking up the user's voice;
- communication means (17,18) for receiving and transmitting signals between a separate 2-way communication device (16) and the loudspeaker means (19) and the microphone means (10), respectively ;
- support means (13-15) attached to said loudspeaker housing (8) on a side facing the user's ear and adapted for supporting said headset by engagement with anatomic details (2-5) of the user's ear;
**characterized in that**
said support means comprise at least two support pads (13-15) arranged around a loudspeaker grille and defining two or more openings between them, a first one (13) of said pads being shaped and positioned to fit into the area of the Cymba Concha (3a) by penetration from the area below the Inferior Crux (2b) of the Antihelix and above the Crus (1a) of Helix, and a second pad (14) being positioned and shaped to fit between the Tragus (5) and the Antitragus (4).

2. The headset of claim 1, wherein the length of the openings is comparable to a pad length dimension.

3. The headset of claim 1 or 2, wherein the two or more openings are arranged with respect to the pads such that the headset, in use, allows surrounding sound to penetrate the user's ear from various directions.

4. The headset of any of claims 1-3, wherein a third support pad (15) is shaped and positioned so as to engage the rear wall of the Concha (3b), to provide improved stability.

5. The headset of any of claims 1-4, wherein the communication means include a radio receiver (18), a transmitter (18) and an antenna (17) all located inside the loudspeaker housing (8) for wireless 2-way communication with said separate communication device (16).

6. The headset of claim 5, wherein a battery compartment (9) is arranged as an extension downward from the loudspeaker housing (8).

7. The headset of claim 6, wherein a user interface is integrated in the battery compartment (9) by means of operating buttons (12) arranged in a compartment wall.

8. The headset of any of claims 1-4, wherein the communication means include a 2-way cable connection (21) with said separate communication device (16).

9. The headset of any of claims 1-4, wherein the pads (13-15) are attached adjustably to the loudspeaker housing (8) so as to provide proper and comfortable support of the headset in ears of different sizes.

## Patentansprüche

1. Headset zum Anpassen an das Außenohr eines Nutzers ohne Eingriff in den Gehörgang, wobei das Headset
- Lautsprechermittel (19) zum Leiten von Schall in Richtung des Gehörganges eines Nutzers, die in einem Lautsprechergehäuse (8) angeordnet sind,
- Mikrofonmittel (10) zum Aufnehmen der Stimme des Nutzers,
- Kommunikationsmittel (17, 18) zum Empfangen und Übermitteln von Signalen zwischen einer gesonderten 2-Wege-Kommunikationsvorrichtung (16) und den Lautsprechermitteln (19) und den Mikrofonmitteln (10) sowie
- Stützmittel (13-15) umfasst, die an dem Lautsprechergehäuse (8) an einer dem Ohr des Nutzers zugewandten Seite angebracht und zum Stützen des Headsets durch Eingriff mit anatomischen Feinstrukturen (2-5) des Ohrs des Nutzers eingerichtet sind,
**dadurch gekennzeichnet, dass**
die Stützmittel wenigstens zwei Stützkissen (13-15) aufweisen, die um einen Lautsprecherausgang angeordnet sind und zwei oder mehr Öffnungen zwischen ihnen bilden, wobei ein erstes Kissen (13) so ausgestaltet und positioniert ist, dass es in den Bereich der Cymba Conchae (3a) durch Eindringen aus dem Bereich unterhalb des Crus inferius (2b) der Antihelix und oberhalb des Crus (1a) der Helix eingepasst ist, und wobei ein zweites Kissen (14) so positioniert und ausgestaltet ist, dass es zwischen den Tragus (5) und den Antitragus (4) passt.

2. Headset nach Anspruch 1, bei dem die Länge der Öffnungen einer Kissenlängenabmessung vergleichbar ist.

3. Headset nach Anspruch 1 oder 2, bei dem zwei oder mehr Öffnungen derart in Bezug auf die Kissen angeordnet sind, dass das Headset bei Benutzung gestattet, dass Umgebungsgeräusche aus verschiedenen Richtungen in das Ohr des Nutzers eindringen können.

4. Headset nach einem der Ansprüche 1-3, bei dem ein drittes Stützkissen (15) so ausgestaltet und positioniert ist, dass es mit der rückseitigen Wand der Concha (3b) in Eingriff ist, um zu einer verbesserten Stabilität zu führen.

5. Headset nach einem der Ansprüche 1-4, bei dem die Kommunikationsmittel einen Funkempfänger (18), einen Sender (18) und eine Antenne (17) umfassen, die für eine drahtlose 2-Wege-Kommunikation mit der gesonderten Kommunikationsvorrichtung (16) alle innerhalb des Lautsprechergehäuses (8) angeordnet sind.

6. Headset nach Anspruch 5, bei dem ein Batteriegehäuse (9) als eine Verlängerung unterhalb des Lautsprechergehäuses (8) angeordnet ist.

7. Headset nach Anspruch 6, bei dem eine Nutzerschnittstelle in dem Batteriegehäuse (9) mittels Betätigungstasten (12) integriert ist, die in einer Gehäusewand angeordnet sind.

8. Headset nach einem der Ansprüche 1-4, bei dem die Kommunikationsmittel eine 2-Wege-Kabelverbindung (21) mit der gesonderten Kommunikationsvorrichtung (16) aufweisen.

9. Headset nach einem der Ansprüche 1-4, bei dem die Kissen (13-15) einstellbar an dem Lautsprechergehäuse (8) angebracht sind, um eine gute und komfortable Stütze des Headsets in Ohren verschiedener Größen bereitzustellen.

## Revendications

1. Kit mains libres destiné à s'adapter à l'oreille externe d'un utilisateur sans s'engager dans le canal auditif, le kit mains libres comprenant :
- un haut-parleur (19) destiné à diriger le son vers le canal auditif de l'utilisateur et installé dans un boîtier de haut-parleur (8) ;
- un microphone (10) destiné à recueillir la voix de l'utilisateur ;
- des moyens de communication (17, 18) destinés à recevoir et transmettre des signaux entre un dispositif de communication à 2 voies distinct (16) d'une part, le haut-parleur (19) et le microphone (10) d'autre part ;
- des moyens de support (13-15) fixés audit boîtier de haut-parleur (8), d'un côté situé face à l'oreille de l'utilisateur, et conçus pour supporter ledit kit mains libres en s'engageant dans des détails anatomiques (2-5) de l'oreille de l'utilisateur ;
**caractérisé en ce que** :
lesdits moyens de support comprennent au moins deux coussinets de support (13-15) installés autour d'une grille de haut-parleur et définissant entre eux deux ouvertures ou davantage, un premier (13) desdits coussinets étant façonné et placé de manière à s'adapter à l'intérieur de la zone de la cymba de la conque (3a) en pénétrant par la zone située sous le pilier externe (2b) de l'antihélix et au-dessus du pilier (1a) de l'hélix, et un second coussinet (14) placé et façonné de manière à s'adapter entre le tragus (5) et l'antitragus (4).

2. Kit mains libres selon la revendication 1, dans lequel la longueur des ouvertures est comparable à une dimension longitudinale des coussinets.

3. Kit mains libres selon la revendication 1 ou 2, dans lequel les deux ouvertures ou davantage sont disposées par rapport aux coussinets de telle sorte que le kit mains libres, à l'utilisation, permette aux sons environnants de pénétrer l'oreille de l'utilisateur depuis diverses directions.

4. Kit mains libres selon l'une quelconque des revendications 1 à 3, dans lequel un troisième coussinet de support (15) est façonné et placé de manière à s'engager dans la paroi arrière de la conque (3b) afin d'améliorer la stabilité.

5. Kit mains libres selon l'une quelconque des revendications 1 à 4, dans lequel les moyens de communication comprennent un récepteur radio (18), un transmetteur (18) et une antenne (17), tous situés à l'intérieur du boîtier de haut-parleur (8), afin d'établir une communication sans fil à 2 voies avec ledit dispositif de communication distinct (16).

6. Kit mains libres selon la revendication 5, dans lequel un compartiment de batterie (9) est ménagé dans le prolongement vers le bas du boîtier de haut-parleur (8).

7. Kit mains libres selon la revendication 6, dans lequel une interface utilisateur est intégrée au compartiment de batterie (9) par l'intermédiaire de boutons de commande (12) disposés sur une paroi du compartiment.

8. Kit mains libres selon l'une quelconque des revendications 1 à 4, dans lequel les moyens de communication comprennent une connexion filaire à 2 voies (21) avec ledit dispositif de communication distinct (16).

9. Kit mains libres selon l'une quelconque des revendications 1 à 4, dans lequel les coussinets (13-15) sont fixés de manière ajustable au boîtier de haut-parleur (8), de manière à fournir à des oreilles de taille différente un support adéquat et confortable du kit mains libres.
